# FASCICULE DE BREVET EUROPEEN

(11) **EP 0 565 430 B1**
(45) Date de publication et mention de la délivrance du brevet: **18.12.1996**
(21) Numéro de dépôt: 93400888.9
(22) Date de dépôt: 06.04.1993
(51) Int. Cl.: B60R 5/04, B60R 21/06, B60P 7/08

(54) **Véhicule dont le compartiment à bagages comporte un rideau escamotable fixé sur un siège arrière repliable**
Kraftfahrzeuggepäckraum mit einem an einem klappbaren Sitz befestigten einziehbaren Abdeckrollo
Vehicle with a luggage boot comprising a retractable roller blind secured to a foldable rear seat

(30) Priorité: 10.04.1992 FR 9204396
(43) Date de publication de la demande: 13.10.1993
(73) Titulaire: REGIE NATIONALE DES USINES RENAULT S.A., 92109 Boulogne Billancourt (FR)
(72) Inventeur: Girard, Philippe, F-95240 Cormeilles en Parisis (FR); Dumazeau, Jean-Pierre, F-78370 Plaisir (FR)
(74) Mandataire: Ernst-Schonberg, Michel

(56) Documents cités:
- DE-A- 2 624 947
- DE-A- 4 123 655
- DE-A- 4 239 470
- FR-A- 2 401 799
- FR-A- 2 431 395
- US-A- 5 011 208
- PATENT ABSTRACTS OF JAPAN vol. 9, no. 55 (M-362)(1778) 9 Mars 1985 & JP-A-59 190 040 ( NIHON HATSUJIYOU )

## Description

L'invention concerne un véhicule comportant un compartiment à bagages et un siège arrière repliable conformément au préambule de la revendication.

La publication US-A-5011208 décrit un véhicule dans lequel le compartiment à bagages est limité par le dossier d'un siège arrière repliable lorsque ledit siège est en position d'utilisation.

Un rideau escamotable dans un boîtier implanté à la base du dossier porte des moyens de fixation susceptibles de coopérer avec des fixations complémentaires situées sur une porte arrière du véhicule, d'accès au compartiment à bagages.

Dans une telle configuration le rideau escamotable permet de dissimuler le contenu du compartiment à bagages lorsque le siège occupe une position d'utilisation ou une position repliée.

La publication DE-A-4239470 décrit un véhicule dans lequel le rideau escamotable est monté dans un boîtier fixé sur le plancher du véhicule et porte des moyens de fixation susceptibles de coopérer avec des fixations complémentaires situées sur le plancher du véhicule.

La publication DE-A-4123655 décrit un véhicule dans lequel le rideau escamotable est monté dans un premier boîtier enrouleur fixé sur le plancher du véhicule à la base du dossier du siège et s'enroule autour d'un rouleau de renvoi solidaire de la partie haute du dossier pour retenir un deuxième boîtier enrouleur d'un autre rideau escamotable dont l'extrémité porte des moyens de fixation susceptibles de coopérer avec des fixations complémentaires situées sur plusieurs parties de la carrosserie.

Lorsque le véhicule porte une tablette rigide articulée, le siège arrière repliable permet une augmentation notable du compartiment à bagages mais ne permet plus de dissimuler la totalité du contenu dudit compartiment.

Pour résoudre ce problème, la coopération d'une tablette rigide articulée et d'un rideau escamotable pour dissimuler le compartiment à bagages a été réalisée conformément à la revendication 1.

Selon une autre caractéristique de l'invention, le rideau escamotable occupe une position haute compatible avec la position repliée du siège et est fixé à la tablette arrière de sorte que le volume de chargement consécutif au rangement du siège arrière soit masqué.

D'autres caractéristiques et avantages du véhicule dont le compartiment à bagages comporte un rideau escamotable apparaîtront à la lecture de la description d'un exemple de réalisation de celui-ci, faite en référence au dessin annexé dans lequel :
- la figure 1 est une coupe longitudinale d'une partie arrière du véhicule en position normale d'utilisation du siège arrière,
- la figure 2 est une coupe longitudinale d'une partie du véhicule en position repliée du siège arrière avec mise en service du rideau escamotable,
- la figure 3 est une coupe longitudinale d'une partie du véhicule en position avancée du dossier du siège arrière avec mise en service du rideau escamotable,
- la figure 4 est une coupe longitudinale d'une partie du véhicule en position d'utilisation du siège avec maintien d'une charge sur le plancher du véhicule par le rideau escamotable.

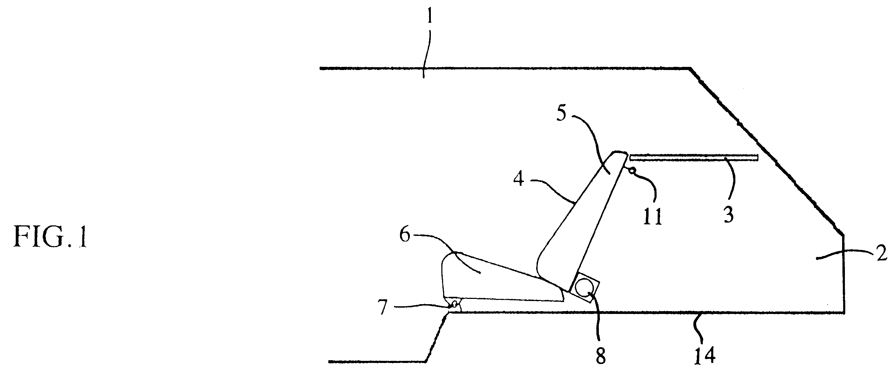

Les figures 1 ; 3 et 4 représentent schématiquement la partie arrière d'un véhicule 1 de type bicorps en position d'utilisation du siège arrière.

Le volume du compartiment à bagages 2 est couvert par une tablette rigide 3 articulée à la carrosserie du véhicule de manière conventionnelle. Le compartiment à bagages est limité par le dossier 5 du siège arrière 4 lorsque le siège 4 est dans la position d'utilisation.

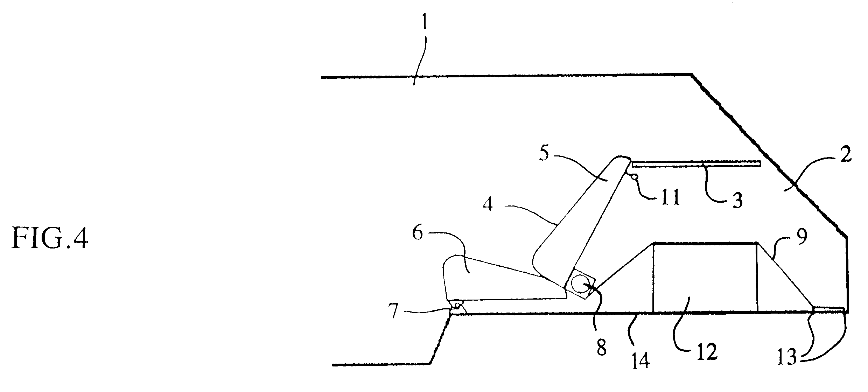

Le compartiment à bagages 2 contient un boitier d'enroulement 8 du rideau 9 escamotable, qui est implanté à la base du dossier 5 du siège 4. Ainsi que cela est représenté à la figure 4, le rideau portant des moyens de fixation coopère, dans cette première position d'utilisation, avec des fixations complémentaires 13 du plancher 14.

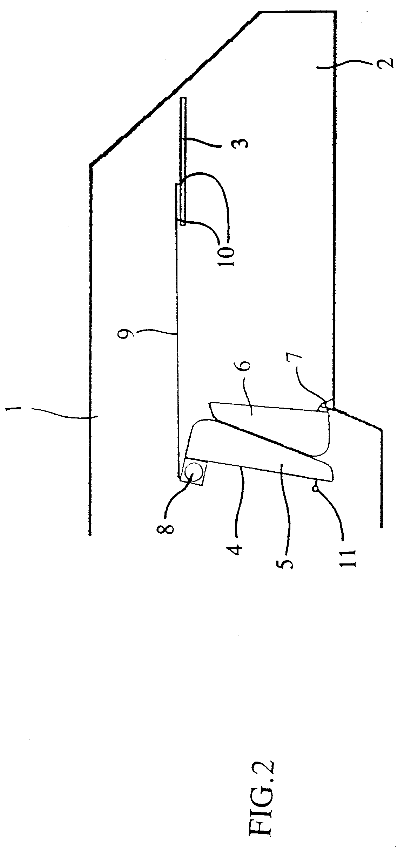

La figure 2 représente une deuxième position d'utilisation du rideau escamotable 9.

Le siège arrière 4 occupe une position repliée par rabattement de l'ensemble du siège autour d'un axe 7 situé à l'avant de l'assise 6 du siège.

Le boitier d'enroulement 8 du rideau 9 occupe dans ce cas une position haute. Le rideau 9 est extrait du boitier 8 et coopère, dans cette deuxième position, avec les fixations complémentaires 10 se trouvant sur la tablette arrière 3, la totalité du contenu du compartiment à bagages 2 étant ainsi dissimulée.

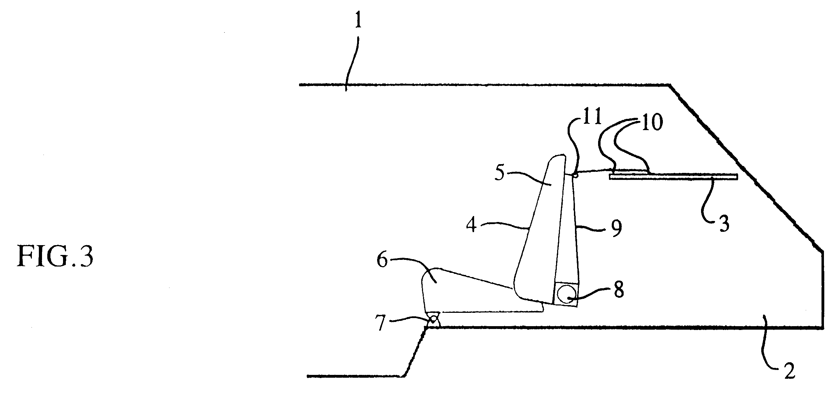

La figure 3 montre une partie du véhicule 1 lorsque le dossier 5 du siège 4 est réglé dans une position plus avancée.

Le contenu du compartiment 2 est dissimulé par le rideau 9 et coopère avec les fixations complémentaires 10 se trouvant sur la tablette 3.

Un axe de renvoi 11 du rideau 9 est solidaire de la partie haute du dossier 5 de telle sorte qu'en position avancée du siège 4, le rideau 9 est susceptible d'être enroulé dans une troisième position autour de l'axe de renvoi 11 et fixé aux fixations 10 sur la tablette 3.

Sur la figure 4, le siège 4 est dans sa position normale d'utilisation, telle que représentée à la figure 1.

Une charge 12 est immobilisée sur le plancher 14 du véhicule 1 par le rideau 9 fixé au plancher du véhicule 1 par des fixations complémentaires 13.

Les fixations complémentaires telles que 10 ou 13 sont constituées à titre d'exemple par des boutons-pression.

Sans sortir du domaine de l'invention, l'axe de renvoi 11 peut être monté ajustable sur le dossier 5.

De la même manière, le siège 4 peut être réalisé de manière conventionnelle sous la forme d'une banquette fractionnée composée d'éléments individuellement repliables dont chacun peut être porteur d'une partie du boitier d'enroulement 8 et d'une partie du rideau 9.

## Revendications

1. Véhicule (1) comportant un compartiment à bagages (2) et un siège arrière (4) repliable, le compartiment (2) étant limité lorsque le siège arrière (4) est en position d'utilisation, par le dossier (5) de ce dernier, le véhicule comportant en outre un rideau escamotable (9) dans un boîtier (8) implanté à la base du dossier (5) et portant des moyens de fixation susceptibles de coopérer, dans une première position d'utilisation du rideau (9), avec des premières fixations complémentaires (13), caractérisé en ce que les premières fixations complémentaires (13) sont situées au plancher du compartiment à bagages (2), en ce que le véhicule comporte en outre une tablette rigide (3) articulée à la carrosserie du véhicule (1) et qui, dans la position d'utilisation du siège arrière (4), couvre le compartiment à bagages et en ce que les moyens de fixation du rideau (9) sont susceptibles, en position repliée du siège arrière (4), de coopérer, dans une seconde position d'utilisation du rideau (9) avec des secondes fixations complémentaires (10) se trouvant sur la tablette rigide (3).

2. Véhicule selon la revendication 1, caractérisé en ce que le siège arrière (4) est réglable entre une position avancée et une position reculée, la position d'utilisation du siège dans laquelle la tablette (3) couvre le compartiment à bagages (2) étant ladite position reculée, et en ce que le dossier (5) du siège (4) porte un axe de renvoi (11) du rideau (9) solidaire de la partie haute du dossier (5), de telle sorte qu'en position avancée du siège (4), le rideau est susceptible d'être enroulé autour de l'axe de renvoi (11) et fixé aux secondes fixations (10) sur la tablette (3) dans une troisième position d'utilisation du rideau (9), le compartiment étant alors couvert et obturé par le rideau (9) et la tablette (3).

3. Siège selon l'une des revendications précédentes, caractérisé en ce que le siège arrière (4) est composé d'éléments individuellement repliables, dont chacun est porteur d'une partie du boîtier (8) et d'une partie du rideau (9).

## Claims

1. Vehicle (1) comprising a luggage compartment (2) and a folding rear seat (4), the compartment (2) being delimited, when the rear seat (4) is in use, by the back rest (5) of said seat, the vehicle further comprising a retractable screen (9) in a housing (8) fixed to the base of the back rest (5) and carrying fixing means able to cooperate, in a first position of use of the screen (9), with first complementary fixing means (13), characterised in that the first complementary fixing means (13) are located on the floor of the luggage compartment (2), in that the vehicle further comprises a rigid shelf (3) joined to the bodywork of the vehicle (1) and which, when the rear seat (4) is in use, covers the luggage compartment and in that the fixing means for the screen (9) are able, when the rear seat (4) is folded, to cooperate in a second position of use of the screen (9) with second complementary fixing means (10) located on the rigid shelf (3).

2. Vehicle according to claim 1, characterised in that the rear seat is adjustable between a forward position and a pushed back position, the position of the seat in which the shelf (3) covers the luggage compartment (2) being said pushed back position, and in that the back rest (5) of the seat (4) carries a return shaft (11) for the screen (9) integral with the upper part of the back rest (5), such that when the seat (4) is in the forward position, the screen can be rolled around the return shaft (11) and fixed to the second fixing means (10) on the shelf (3) in a third position of use of the screen (9), the compartment then being covered and concealed by the screen (9) and the shelf (3).

3. Seat according to one of the preceding claims, characterised in that the rear seat (4) is composed of individually foldable elements, each one of which carries a part of the housing (8) and a part of the screen (9).

## Patentansprüche

1. Kraftfahrzeug (1), mit einem Gepäckraum (2) und mit einem umklappbaren Rücksitz (4), wobei der Raum (2) durch die Rücklehne (5) begrenzt ist, wenn der Rücksitz in seiner Benutzungsstellung ist und wobei das Fahrzeug außerdem ein Abdeckrollo (9) aufweist, das in ein Gehäuse (8) aufrollbar ist, welches im Unterteil der Rücklehne (5) eingebaut ist und das eine Befestigungsanordnung aufweist, die in der ersten Einsatzstellung des Abdeckrollos (9) mit einer ersten komplementären Befestigungsanordnung (13) zusammenwirkt, dadurch gekennzeichnet, daß die erste komplementäre Befestigungsanordnung (13) am Boden des Gepäckraumes (2) angeordnet ist, daß das Kraftfahrzeug außerdem eine steife Platte (3) aufweist, die an der Karosserie des Kraftfahrzeugs (1) angelenkt ist und die in der Benutzungsstellung des Rücksitzes (4) den Gepäckraum abdeckt und daß die Befestigungsanordnung des Abdeckrollos (9) in der umgeklappten Stellung des Rücksitzes (4) in einer zweiten Einsatzstellung des Abdeckrollos (9) mit einer zweiten zusätzlichen Befestigungsanordnung (10) zusammenwirkt, die an der steifen Platte (3) angeordnet ist.

2. Kraftfahrzeug nach Anspruch 1, dadurch gekennzeichnet, daß der Rücksitz (4) zwischen einer vorgeschobenen Stellung und einer zurückgeschobenen Stellung einstellbar ist, daß die Benutzungsstellung des Sitzes, in der die Platte (3) den Gepäckraum (2) abdeckt, die zurückgeschobene Stellung ist und daß die Rücklehne (5) des Sitzes (4) eine Umlenkachse (11) für das Abdeckrollo (9) aufweist, welche mit dem oberen Abschnitt der Rücklehne (5) derart verbunden ist, daß in der vorgeschobenen Stellung des Sitzes (4) das Abdeckrollo um die Umlenkachse (11) abrollbar ist und an einer zweiten Befestigungsanordnung (10) an der Platte (3) in einer dritten Einsatzstellung des Abdeckrollos (9) befestigbar ist, so daß der Gepäckraum durch das Abdeckrollo (9) und die Platte (3) vollständig abgedeckt ist.

3. Sitz nach einem der vorhergehenden Ansprüche, dadurch gekennzeichnet, daß der Rücksitz (4) aus einzeln umklappbaren Bestandteilen besteht, deren jeder einen Teil des Gehäuses (8) und einen Teil des Abdeckrollos (9) trägt.
